# EUROPÄISCHE PATENTSCHRIFT

(11) **EP 0 430 940 B1**
(45) Veröffentlichungstag und Bekanntmachung des Hinweises auf die Patenterteilung: **18.11.1993**
(21) Anmeldenummer: 88905678.4
(22) Anmeldetag: 01.07.1988
(51) Int. Cl.: H02J 7/14

(54) **GENERATORANLAGE**
GENERATOR INSTALLATION
INSTALLATION DE GENERATEUR

(30) Priorität: 05.09.1987 DE 3729772
(43) Veröffentlichungstag der Anmeldung: 12.06.1991
(73) Patentinhaber: ROBERT BOSCH GMBH, 70442 Stuttgart (DE)
(72) Erfinder: MEYER, Friedhelm, D-7132 Illingen (DE)
(86) Internationale Anmeldenummer: DE8800408
(87) Internationale Veröffentlichungsnummer: WO8902667

(56) Entgegenhaltungen:
- EP-A- 0 094 685
- FR-A- 2 427 724
- FR-A- 2 518 839
- FR-A- 2 525 038
- GB-A- 2 176 666

## Beschreibung

### Stand der Technik

Die Erfindung geht aus von einer Generatoranlage nach der Gattung des Hauptanspruchs.

Die vom Generator ans Bordnetz gelieferte Spannung muß geregelt und an die jeweiligen Erfodernisse angepaßt werden. Generatoranlagen mit Vorrichtungen zur Regelung der in ein Bordnetzsystem einzuspeisenden Generatorspannung sind bereits bekannt.

So wird beispielsweise in der DE-OS 33 13 398 bzw. der zur selben Patentfamilie gehörenden FR-A-2 525 039 eine Vorrichtung zur Regelung eines Ladesystems für ein Kraftfahrzeug beschrieben, in der sowohl Betriebsparameter als auch Ladesystemparameter in festgelegten Zeitabständen ermittelt und ausgewertet werden. Dabei werden eine Auswerteschaltungsanordnung, die aus einem Mikroprozessor 6 zur Regelung des Ladezustands und einem Mikroprozessor 8 zur Motorsteuerung besteht, Betriebsparameter zugeführt, nämlich Drehzahl, Luft/Brennnstoff-Verhältnis, Generatorstrom, Generatorspannung, Batteriestrom und Batteriespannung. In der Auswerteschaltungsanordnung wird der optimale Erregerstrom bestimmt, der jeweils vorliegende Erregerstrom wird so beeinflußt, daß er diese optimalen Werte annimmt.

Diese Vorrichtung zur Regelung des Ladesystems erfaßt jedoch noch nicht alle wesentlichen Parameter, weiterhin kann die Generatordrehzahl nicht unabhängig von der Drehzahl der Brennkraftmaschine beeinflußt werden, dies wäre jedoch für eine optimale Regelung der Bordnetzspannung wünschenswert.

Eine Generatoranlage, bei der ein Generator über ein Getriebe von der Brennkraftmaschine angetrieben werden kann, ist aus der FR-A-2 518 839 bekannt. Dabei wird das Getriebe mittels einer Steuerelektronik in zwei Übersetzungsstufen betrieben, wobei die Umschaltung zwischen den beiden Stufen in Abhängigkeit von der Drehzahl der Brennkraftmaschine und/oder dem Ladezustand der Batterie erfolgt. Der Steuerelektronik werden als Eingangsgrößen die Drehzahl der Brennkraftmaschine, die Batteriespannung, der Batteriestrom, die Batterietemperatur und die Generatordrehzahl zugeführt, der Batterieladezustand wird berechnet. Der Generatorstrom und die Generatorbauteiltemperatur wird dagegen nicht erfaßt. Eingegriffen wird mittels der Steuerelektronik lediglich auf das Getriebe zwischen der Brennkraftmaschine und dem Generator, jedoch nicht auf die übrigen Ausgangsgrößen der Auswerteschaltung.

Eine weitere Generatoranlage mit veränderlichem Zwischentrieb ist in der FR-A-2 485 239 offenbart. Bei dieser Generatoranlage wird zur Verringerung der Geräuschentwicklung je nach Motordrehzahl eine kleinere oder größere Getriebeübersetzung gewählt. Dabei ist eine Auswerteschaltung vorgesehen, die aus einer Steuereinrichtung und einem Spannungsregler besteht. Dieser Auswerteschaltung werden als Eingangsgröße die Batteriespannung, der Erregerstrom und die Generatordrehzahl zugeführt. Die Ausgangsgröße, auf die eingegriffen wird, ist die Übersetzung des Zwischentriebs. Der Erregerstrom wird in üblicher Weise mittels des Spannungsreglers beeinflußt.

### Vorteile der Erfindung

Die erfindungsgemäße Generatoranlage mit den kennzeichnenden Merkmalen des Hauptanspruchs hat demgegenüber den Vorteil, daß eine Auswerteschaltungsanordnung die für die Spannungsregelung wesentlichen Parameter der Brennkraftmaschine und des Bordnetzes erfaßt, sie unter Berücksichtigung intern abgespeicherter Kennfelddaten auswertet und damit eine optimal funktionstüchtige und umfassende Regelung der Generatoranlage ermöglicht.

Über einen zwischen die Brennkraftmaschine und den von der Brennkraftmaschine antreibbaren Generator geschalteten Zwischentrieb kann eine optimale Drehzahlanpassung des Generators an die Spannungserfordernisse des Bordnetzes vorgenommen werden.

Eine Aufteilung des Bordnetzes in einen Bereich mit spannungsunempfindlichen Verbrauchern, einen Bereich mit spannungsempfindlichen Verbrauchern und einen Bereich mit eng tolerierter Verbraucherspannung, vorzugsweise für empfindliche Elektronik ermöglicht eine einfachere Spannungsregelung.

Durch die genannten Maßnahmen kann je nach gesetzter Priorität entweder das Geräusch der Generatoranlage dadurch minimiert werden, daß der Generator ständig in einem geeigneten Drehzahlbereich betrieben wird oder mit niedrigst möglichem Kraftstoffverbrauch mechanische in elektrische Energie umgewandelt werden, indem die Drehzahl des Generators bei starker Belastung der Brennkraftmaschine und bei guter Spannungsversorgung von Batterie und Verbrauchern, über den Zwischentrieb verringert wird, ohne daß der Generator ganz von der Brennkraftmaschine abgekoppelt wird. Bei Vollast und gleichzeitiger guter Spannungsversorgung kann der Generator auch völlig von der Brennkraftmaschine abgekoppelt werden, damit die volle Leistung der Brennkraftmaschine für den Antrieb des Fahrzeugs zur Verfügung steht.

Durch die in den Unteransprüchen aufgeführten Maßnahmen sind vorteilhafte Weiterbildungen und Verbesserungen der im Hauptanspruch angegebenen Generatoranlage möglich.

### Zeichnung

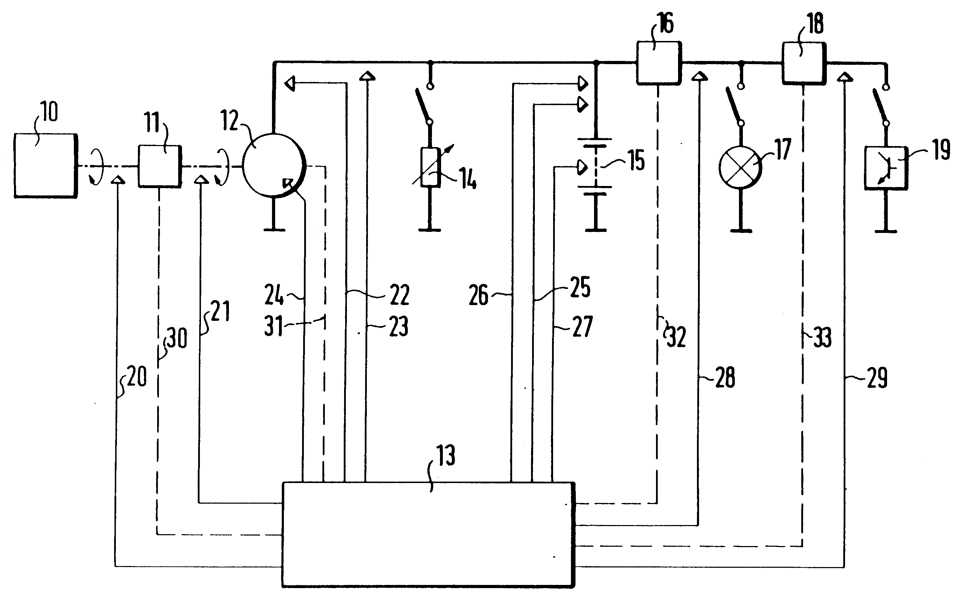

Ein Ausführungsbeispiel der vorliegenden Erfindung ist in der Zeichnung dargestellt und wird im folgenden näher erläutert.

### Beschreibung des Ausführungsbeispiels

Die erfindungsgemäße Generatoranlage umfaßt den von einer Brennkraftmaschine 10 über einen elektronisch regelbaren Zwischentrieb 11 antreibbaren Generator 12, eine Auswerteschaltungsanordnung 13 und ein Bordnetzsystem 14, 15, 16, 17, 18, 19. Das Bordnetzsystem ist dreigeteilt und umfaßt einen Bereich mit geringen Anforderungen an die Konstanz der Spannung, der neben der Batterie 15 auch mit 14 angedeutete spannungsunempfindliche Verbraucher enthält, beispielsweise eine Zusatzheizung. Ein Bereich des Bordnetzes mit Spannungsempfindlichen Bauelementen, beispielsweise Lampen, ist mit 17 symbolisiert, 19 symbolisiert den Teil des Bordnetzes, der die sehr spannungsempfindlichen elektronischen Bauelemente enthält.

Getrennt sind die einzelnen Teile des Bordnetzes durch Spannungswandler 16 und 18, über die mittels der Auswerteschaltungsanordnung eine exaktere Spannungsregelung der entsprechenden Bordnetzbereiche möglich ist.

Die Meßgrößen Brennkraftmaschinendrehzahl, Generatordrehzahl, Generatorspannung, Generatorstrom, Bauteiltemperatur des Generators (z.B. Dioden, Lager, Wicklungen), Batteriespannung, Batteriestrom, Batterietemperatur und Verbraucherspannung werden mit Hilfe geeigneter Sensoren bzw. Meßinstrumente erfaßt und über die Leitungen 20 bis 29 an die Auswerteschaltungsanordnung weitergegeben. Dabei besteht folgende Zuordnung:

| | | |
|---|---|---|
| Brennkraftmaschinendrehzahl: | Leitung | 20 |
| Generatordrehzahl | | 21 |
| Generatorspannung | | 22 |
| Generatorstrom | | 23 |
| Bauteiltemperatur des Generators | | 24 |
| Batteriespannung | | 25 |
| Batteriestrom | | 26 |
| Batterietemperatur | | 27 |
| Verbraucherspannung für empfindliche Verbraucher | | 28 |
| Verbraucherspannung für sehr empfindliche Verbraucher | | 29 |

In der Auswerteschaltungsanordnung werden die Meßgrößen abgespeichert und ggf. für die Regelung der Generatoranlage verwendet.

Zur Optimierung des Betriebs der Generatoranlage wird über die Auswerteschaltungsanordnung auf den elektronisch regelbaren Zwischentrieb, den Erregerstrom des Generators und die beiden Spannungswandler im Bordnetz über die Leitungen 30, 31, 32 und 33 Einfluß genommen.

Die einzelnen Einflußgrößen müssen nicht alle gleichzeitig verarbeitet werden. Je nach Systemauslegunng kann eine beliebige Kombination zusätzlich zu den nach Anspruch 1 festgelegten Größen verwendet werden. Dies gilt auch für die Steuergrößen.

Die Auswerteschaltungsanordnung enthält Kennfelder, deren Daten auf den Generatorwirkungsgrad, den Zwischentriebwirkungsgrad, die zulässigen Bauteiltemperaturen, das Generatorgeräusch, die Batteriekennwerte und auf die zulässige Verbraucherspannung abgestimmt sind. Die Kennfelder, die durch Versuche auf dem Prüfstand ermittelt werden, werden im Fahrzeug nach den vorgegebenen Kriterien Leistungsbedarf, Verbrauch, Abgas und Fahrverhalten optimiert. In der Auswerteschaltungsanordnung werden aus den eingehenden Sensorinformationen unter Verwertung der zugehörigen gespeicherten Kennfelder die für die Regelung der Generatoranlage benötigten Ausgangsgrößen ermittelt. Dabei kann festgelegt werden, wie die Prioritäten gesetzt werden, d.h. die Auswerteschaltungsanordnung kann das Übersetzungsverhältnis des Zwischentriebs so beeinflussen, daß bei ausreichender Spannungsversorgung für Batterie und Verbraucher beispielsweise der Gesamtwirkungsgrad optimiert ist. Dabei wird mit niedrigst möglichem Kraftstoffverbrauch mechanische Energie in elektrische Energie umgewandelt. Mittels des Zwischentriebs kann die Generatorleistung bei starker Belastung der Brennkraftmaschine, beispielsweise beim Bergauffahren oder bei Fahrt mit Höchstgeschwindigkeit durch Verringerung der Generatordrehzahl vermindert werden und dadurch eine Entlastung der Brennkraftmaschine erreicht werden, im Extremfall kann der Generator für die Zeit höchster Belastung der Brennkraftmaschine völlig von dieser abgekoppelt und damit stillgelegt werden.

Die Auswerteschaltungsanordnung kann sowohl am Gehäuse des Generators befestigt werden als auch an einer vom Generator entfernten Stelle der Brennkraftmaschine eingebaut werden.

Durch die Beschränkung der Generatordrehzahl auf bestimmte Bereiche wird einerseits sichergestellt, daß die Geräuschentwicklung der Generatoranlage möglichst gering gehalten wird, andererseits kann eine zu starke Wärmeentwicklung vermieden werden. Aufgrund der gemessenen Parameter können Fehler beispielsweise über Plausibilitätsabfragen erkannt und ggf. auch angezeigt werden. Damit wird sichergestellt, daß zulässige Größen, beispielsweise die zulässigen Bauteiltemperaturen nicht überschritten werden.

## Patentansprüche

1. Generatoranlage für eine Brennkraftmaschine (10) mit einem von der Brennkraftmaschine (10) über einen Zwischentrieb (11) antreibbaren Generator (12), mit einem Bordnetz und einer Auswerteschaltungsanordnung (13), der wenigstens eine der Eingangsgrößen Motordrehzahl, Generatorspannung, Generatordrehzahl, Batteriespannung, Batteriestrom, Batterietemperatur und Verbraucherspannung zur Verarbeitung zugeführt wird, und bei der auf die Ausgangsgröße der Auswerteschaltungsanordnung (13), den Erregerstrom des Generators und gegebenenfalls Übersetzung des Zwischentriebes eingegriffen wird, dadurch gekennzeichnet, daß zusätzlich wenigstens eine der Größen Generatorstrom oder Generatorbauteiltemperatur erfaßt wird und daß gegebenenfalls auf eine weitere der Ausgangsgrößen der Auswerteschaltungsanordnung (13), Lampenspannung oder Elektronikspannung eingegriffen wird, daß das Bordnetz mehrteilig ist, wobei die Spannungstoleranz in den einzelnen Bordnetzteilen den Anforderungen der enthaltenen Bauelemente angepaßt werden kann und daß die Auswerteschaltungsanordnung die einzelnen Spannungsregelungen für die Bordnetzteile übernimmt.

2. Generatoranlage nach Anspruch 1, dadurch gekennzeichnet, daß zur Bestimmung der Ausgangsgrößen der Auswerteschaltungsanordnung (13) mehrdimensionale Kennfelder ausgewertet werden.

3. Generatoranlage nach einem der vorhergehenden Ansprüche, dadurch gekennzeichnet, daß die Auswerteschaltungsanordnung das Übersetzungsverhältnis des Zwischentriebs (11) so beeinflußt, daß sich die Generatordrehzahl in einem optimalen Wertebereich insbesondere bezüglich der Wärmeentwicklung oder der Geräuschentwicklung bewegt.

4. Generatoranlage nach Anspruch 1, dadurch gekennzeichnet, daß die Auswerteschaltungsanordnung das Übersetzungsverhältnis des Zwischentriebs so beeinflußt, daß die Generatordrehzahl in einem Bereich gehalten wird, in dem mechanische Energie optimal in elektrische Energie umgewandelt wird.

5. Generatoranlage nach Anspruch 1, dadurch gekennzeichnet, daß oberhalb eines bestimmten Ladezustandes der Batterie (15) und/oder bei ausreichender Spannungsversorgung der Verbraucher, die Generatorleistung reduzierbar ist.

6. Generatoranlage nach Anspruch 5, dadurch gekennzeichnet, daß die Generatorleistung durch Verringerung der Generatordrehzahl mittels eines Zwischentriebs (11), der zwischen die Brennkraftmaschine (10) und den Generator (12) geschaltet ist, reduziert wird.

7. Generatoranlage nach einem der Ansprüche 1 bis 6, dadurch gekennzeichnet, daß mit steigender Belastung der Brennkraftmaschine die Leistung des Generators reduziert wird.

8. Generatoranlage nach Anspruch 1, dadurch gekennzeichnet, daß der Generator bei Vollast der Brennkraftmaschine von der Brennkraftmaschine abgekoppelt werden kann.

9. Generatoranlage nach Anspruch 1, dadurch gekennzeichnet, daß in der Auswerteschaltungsanordnung (11) Prioritäten für das je nach Bedarf wichtigste Optimierungsmerkmal setzbar sind.

10. Generatoranlage nach einem der vorhergehenden Ansrpüche, dadurch gekennzeichnet, daß die Asuwerteschaltungsanordnung (11) am Gehäuse des Generators (12) befestigt ist.

11. Generatoranlage nach Anspruch 1, dadurch gekennzeichnet, daß in der Auswerteschaltungsanordnung (11) Mittel zur Fehlererkennung vorgesehen sind.

## Claims

1. Generator system for an internal combustion engine (10) comprising a generator (12), which can be driven by the internal combustion engine (10) via an intermediate drive (11), a vehicle electrical system and an evaluation circuitry (13) to which at least one of the input variables comprising engine rotary speed, generator voltage, generator rotary speed, battery voltage, battery current, battery temperature and load voltage can be fed for processing and in which the output variable of the evaluation circuitry (13), the excitation current of the generator and, if need be, transmission of the intermediate drive can be acted on, characterised in that, in addition, at least one of the variables comprising generator current or generator component temperature is determined, and in that, if need be, another of the output variables of the evaluation circuitry (13), lamp voltage or electronic system voltage is acted on, in that the vehicle electrical system is multi-part and the voltage tolerance in the individual vehicle electrical system parts can be matched to the requirements of the components they contain, and in that the evaluation circuitry is responsible for the individual voltage regulations for the vehicle electrical system parts.

2. Generator system according to Claim 1, characterised in that multidimensional operating maps are evaluated to determine the output variables of the evaluation circuitry (13).

3. Generator system according to one of the preceding claims, characterised in that the evaluation circuitry modifies the transmission ratio of the intermediate drive (11) in such a way that the generator rotary speed varies in an optimum value range, in particular in relation to the heat developed or the noise developed.

4. Generator system according to Claim 1, characterised in that the evaluation circuitry modifies the transmission ratio of the intermediate drive in such a way that the generator rotary speed is kept in a range in which mechanical energy is optimally converted into electrical energy.

5. Generator system according to Claim 1, characterised in that, above a certain charge state of the battery (15) and/or if the voltage supply to the loads is adequate, the generator power can be reduced.

6. Generator system according to Claim 5, characterised in that the generator power is reduced by reducing the generator rotary speed by means of an intermediate drive (11) which is connected between the internal combustion engine (10) and the generator (12).

7. Generator system according to one of Claims 1 to 6, characterised in that, as the loading of the internal combustion engine increases, the output of the generator is reduced.

8. Generator system according to Claim 1, characterised in that the generator can be decoupled from the internal combustion engine at full load of the internal combustion engine.

9. Generator system according to Claim 1, characterised in that priorities can be set in the evaluation circuitry (11) for the optimisation feature which is most important as determined by requirements.

10. Generator system according to one of the preceding claims, characterised in that the evaluation circuitry (11) is mounted on the generator (12) housing.

11. Generator system according to Claim 1, characterised in that error detection means are provided in the evaluation circuitry (11).

## Revendications

1. Installation de générateur pour un moteur à combustion interne (10) avec un générateur (12) pouvant être entraîné par le moteur à combustion interne (10) au moyen d'une transmission intermédiaire (11), avec un réseau de bord et un circuit d'exploitation (13) auquel on envoie pour retraitement au moins l'une des grandeurs d'entrée : vitesse de rotation du moteur, tension du générateur, vitesse de rotation du générateur, tension de la batterie, intensité de la batterie, température de la batterie et tension des appareils utilisateurs et dans laquelle, on agit sur la grandeur de sortie du circuit d'exploitation (13), le courant de l'excitatrice du générateur et le cas échéant la démultiplication de la transmission intermédiaire, installation de générateur caractérisée en ce qu'en plus on détecte au moins l'une des grandeurs : intensité du générateur ou température des composants du générateur et en ce que le cas échéant, l'on agit sur une autre des grandeurs de sortie du circuit d'exploitation (13) : tension des lampes ou tension de l'électronique, en ce que le réseau de bord est réparti en plusieurs parties, les écarts de tension pouvant être ajustés dans les différentes parties du réseau de bord aux exigences des composants se trouvant dans ces parties et en ce que le circuit d'exploitation assume les différentes régulations de tension pour les parties du réseau de bord.

2. Installation de générateur selon la revendication 1, caractérisé en ce qu'on exploite des champs caractéristiques à plusieurs dimensions pour déterminer les grandeurs de sortie du circuit d'exploitation (13).

3. Installation de générateur selon l'une des revendications précédentes, caractérisée en ce que le circuit d'exploitation influence le rapport de démultiplication de la transmission intermédiaire (11) de telle façon que la vitesse de rotation du générateur se déplace dans une zone optimale de valeurs en particulier en ce qui concerne le dégagement de chaleur ou le développement du bruit.

4. Installation de générateur selon la revendication 1, caractérisée en ce que le circuit d'exploitation influence le rapport de démultiplication de la transmission intermédiaire de telle façon que la vitesse de rotation du générateur soit maintenue dans une zone dans laquelle on convertit de façon optimale l'énergie mécanique en énergie électrique.

5. Installation de générateur selon la revendication 1, caractérisée en ce qu'au-dessus d'un état de charge déterminé de la batterie (15) et/ou quand l'alimentation en tension des utilisateurs est suffisante, on peut réduire la puissance du générateur.

6. Installation de générateur selon la revendication 5, caractérisée en ce que la puissance du générateur est réduite en diminuant la vitesse de rotation du générateur au moyen d'une transmission intermédiaire (11) qui est montée entre le moteur à combustion interne (10) et le générateur (12).

7. Installation de générateur selon l'une des revendications 1 à 6, caractérisée en ce que, quand la charge du moteur à combustion interne est croissante, on réduit la puissance du générateur.

8. Installation de générateur selon la revendication 1, caractérisée en ce que, quand le moteur à combustion interne est à pleine charge, on peut découpler le générateur du moteur à combustion interne.

9. Installation de générateur selon la revendication 1, caractérisée en ce que dans le circuit d'exploitation (13), on peut établir des priorités pour la caractéristique d'optimisation la plus importante en fonction des besoins.

10. Installation de générateur selon l'une des revendications précédentes, caractérisée en ce que le circuit d'exploitation (13) est fixé sur le carter du générateur (12).

11. Installation de générateur selon la revendication 1, caractérisée en ce que dans le circuit d'exploitation (13), on prévoit des moyens pour détecter des défauts.
